# EUROPÄISCHE PATENTSCHRIFT

(11) **EP 2 005 505 B1**
(45) Veröffentlichungstag und Bekanntmachung des Hinweises auf die Patenterteilung: **24.11.2010**
(21) Anmeldenummer: 07722179.4
(22) Anmeldetag: 05.04.2007
(51) Int. Cl.: H01M 8/02, H01M 8/24

(54) **POLARPLATTE, INSBESONDERE ENDPLATTE ODER BIPOLARPLATTE FÜR EINE BRENNSTOFFZELLE**
POLAR PLATE, PARTICULARLY END PLATE OR BIPOLAR PLATE FOR A FUEL CELL
PLAQUE POLAIRE, NOTAMMENT PLAQUE D'EXTRÉMITÉ OU PLAQUE BIPOLAIRE POUR PILE À COMBUSTIBLE

(30) Priorität: 10.04.2006 DE 102006016814
(43) Veröffentlichungstag der Anmeldung: 24.12.2008
(73) Patentinhaber: Staxera GmbH, 01237 Dresden (DE)
(72) Erfinder: REINERT, Andreas, 01277 Dresden (DE); BALDUS, Hans-Peter, 95189 Köditz (DE)
(74) Vertreter: Schumacher & Willsau
(86) Internationale Anmeldenummer: PCT/DE2007/000621
(87) Internationale Veröffentlichungsnummer: WO 2007/115558

(56) Entgegenhaltungen:
- EP-A- 1 447 869
- WO-A-99/54131
- DE-C1- 4 410 711
- US-A- 5 496 655
- US-A1- 2005 221 138

## Beschreibung

Die Erfindung betrifft eine Polarplatte, insbesondere eine Endplatte oder eine Bipolarplatte, für eine Brennstoffzelle, mit zumindest einem Flowfield, das von zumindest einer Seite der Polarplatte zugänglich ist. Weiterhin betrifft die Erfindung eine Abschluss- und eine Wiederholeinheit für einen Brennstoffzellenstapel sowie einen Brennstoffzellenstapel.

Beispielsweise bei SOFC-Brennstoffzellensystemen kann der Brennstoffzellenstapel aus aufeinander gestapelten Wiederholeinheiten sowie zwei Abschlusseinheiten bestehen.

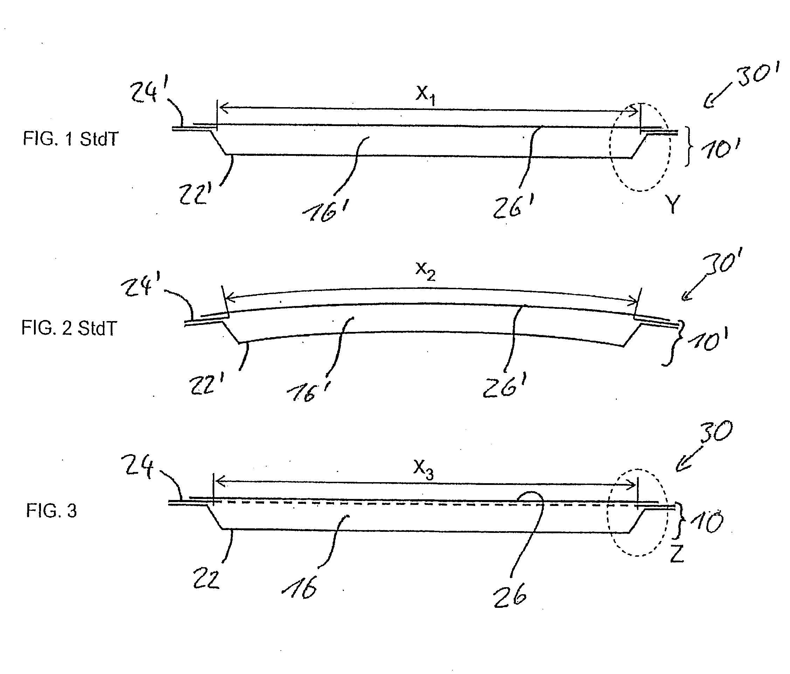

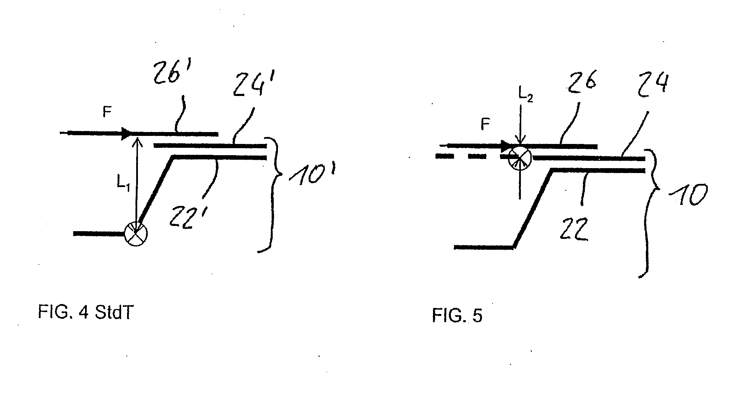

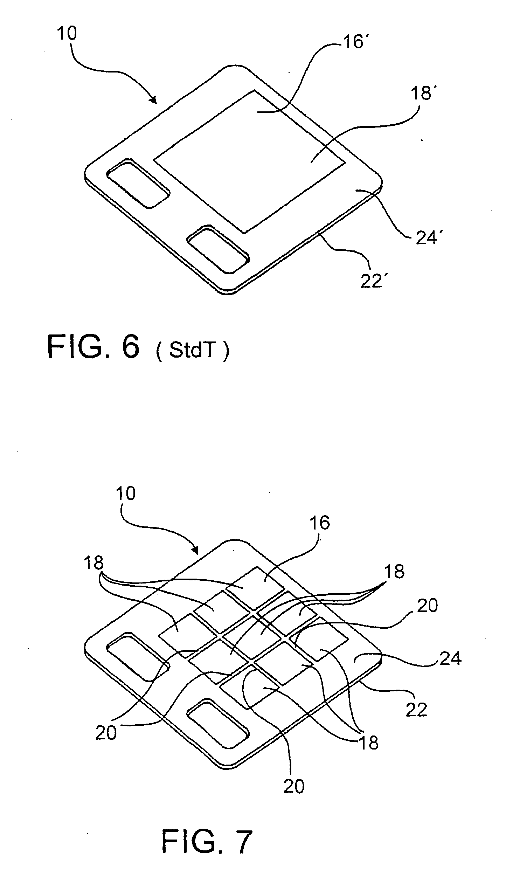

Die Figuren 1, 2, 4, und 6 zeigen eine Polarplatte gemäß dem Stand der Technik, wobei Figur 1 eine schematische Schnittansicht einer Polarplatte, Figur 2 die aufgrund von Spannungen verformte Polarplatte von Figur 1, Figur 4 das Detail Y aus Figur 1 und Figur 6 eine perspektivische Darstellung der Polarplatte zeigt. Die bekannte Polarplatte 10' umfasst eine ein Gehäuseunterteil bildende Flowfield-Platte 22', die ein nicht näher dargestelltes Flowfield 16' aufweist, und eine ein oberes Gehäuseteil bildende Blindplatte 24'. Die Blindplatte 24' umfasst neben zwei nicht näher interessierenden Betriebsmittelzuführungsöffnungen eine Zugangsöffnung 18', über die das Flowfield 16' zugänglich ist, wie dies am Besten in Figur 6 zu erkennen ist. Die Flowfield-Platte 22' und die Blindplatte 24' sind durch eine nicht näher dargestellte Schweißnaht gasdicht verbunden. Über und/oder in der Zugangsöffnung 18' ist eine Membran-Elektroden-Einheit 26' angeordnet, die beispielsweise mittels Glaslot im Randbereich der Blindplatte 24' kraftschlüssig befestigt ist. Bei realen Ausführungsformen zusätzlich vorgesehene Dichtungen, kontaktvermittelnde Schichten und so weiter sind der Übersichtlichkeit halber nicht dargestellt.

Die Membran-Elektroden-Einheit 26' kann zum Beispiel primär aus Yttrium stabilisierten Zirkonoxid gefertigt sein, während die Polarplatte 10' aus ferritischem Stahl hergestellt sein kann. Derart unterschiedliche Materialien weisen unterschiedliche Ausdehnungskoeffizienten auf, die beim thermischen Zyklisieren zu Spannungen führen (beispielsweise bei einem SFOC-Brennstoffzellensystem kann die Temperatur zwischen Raumtemperatur und 800 °C oder mehr Betriebstemperatur schwanken). Sowohl Yttrium stabilisiertes Zirkonoxid als auch ferritischer Stahl sind prinzipiell in der Lage, Zug- und Druckspannungen aufzunehmen, ohne dabei plastisch deformiert zu werden. Die insbesondere in Figur 1 zu erkennende dreidimensionale Struktur der Polarplatte 10' mit schmalen Rändern führt jedoch dazu, dass es zu Biegemomenten und damit zur Biegung der Struktur kommen kann. Weiterhin kann es zu Ausweichbewegungen durch den mechanischen Fall des Knickens kommen. Wenn die Membran-Elektroden-Einheit 26' beispielsweise bei Raumtemperatur unter Druckspannung gerät, während die aus der Flowfield-Platte 22' und der Blindplatte 24' bestehende Polarplatte 10' unter Zugspannung steht, entsteht ein Biegemoment, wie dies in Figur 4 dargestellt ist. Dabei wirkt die aus den Druck- und Zugspannungen resultierende Kraft F mit einem Hebelarm L₁ zusammen. Dieses Biegemoment kann zu einer Deformation der Polarplatte 10' führen, wie dies in Figur 2 dargestellt ist. Die dargestellte Deformation ist eine Relaxion der Spannungen. Es stellt sich eine Gleichgewichtslage ein, bei der sich auch Längen ändern. Beispielsweise ist das in Figur 2 dargestellte Maß x₂ größer als das in Figur 1 dargestellte Maß x₁.

Deformationen von Wiederholeinheiten oder Abschlusseinheiten 30', wie sie in Figur 2 dargestellt sind, können zum Aufplatzen von Dichtungen und/oder zum Abreißen beziehungsweise Abgleiten von elektrischen Kontakten führen.

Der Erfindung liegt daher die Aufgabe zugrunde, Deformationen von Abschluss- und/oder Wiederholeinheiten für Brennstoffzellenstapel beim thermischen Zyklisieren zumindest stark zu vermindern.

Diese Aufgabe wird durch die Merkmale der unabhängigen Ansprüche gelöst.

Vorteilhafte Ausgestaltung und Weiterbildung der Erfindung sind in den abhängigen Ansprüchen angegeben.

Die erfindungsgemäße Polarplatte baut auf dem gattungsgemäßen Stand der Technik dadurch auf, dass das zumindest eine Flowfield über eine Mehrzahl von Zugangsöffnungen zugänglich ist. Dieser Lösung liegt die Erkenntnis zugrunde, dass, wenn anstelle einer großen Zugangsöffnung mehrere kleine Zugangsöffnungen vorgesehen sind, das zwischen den Zugangsöffnungen vorhandene Material zu einer Versteifung des Aufbaus und weiterhin zu geringeren Biegemomenten führt. Dadurch wird im Ergebnis die Deformation von Abschluss- und/oder Wiederholeinheiten zumindest stark vermindert, was eine verbesserte Zyklenfestigkeit ergibt. Da keine Dichtungen mehr aufplatzen, wird die Dichtheit verbessert. Da auch ein Abreißen oder Abgleiten von elektrischen Kontakten verhindert wird, ergibt sich eine geringere Kontaktdegradation im gesamten Brennstoffzellenstapel, das heißt der Kontaktierung von Anode und Kathode und so weiter.

Bei bevorzugten Ausführungsformen ist vorgesehen, dass die Mehrzahl von Zugangsöffnungen durch zumindest eine oder mehrere Verstärkungsstreben voneinander getrennt sind. Beispielsweise ist es möglich, eine große rechteckige oder quadratische Zugangsöffnung durch senkrecht zueinander angeordnete Verstärkungsstreben in eine Mehrzahl von rechteckigen oder quadratischen kleineren Zugangsöffnungen zu unterteilen. In diesem Zusammenhang wird es als besonders vorteilhaft erachtet, wenn die Verstärkungsstreben durch Material einer so genannten Blindplatte gebildet werden, wie dies später noch näher erläutert wird.

Weiterhin wird für erfindungsgemäße Polarplatte bevorzugt, dass sie eine das zumindest eine Flowfield aufweisende Flowfield-Platte und eine die Mehrzahl von Zugangsöffnungen aufweisende Blindplatte umfasst. Ähnlich wie beim Stand der Technik sind die Flowfield-Platte und die Blindplatte beispielsweise durch Verschweißen gasdicht miteinander verbunden.

Bei bevorzugten Ausführungsformen der erfindungsgemäßen Polarplatte ist vorgesehen, dass sie zumindest abschnittsweise aus Stahl, insbesondere aus ferritischem Stahl besteht. Ferritscher Stahl ist beispielsweise dazu geeignet, Temperaturen, wie sie beim Betrieb von SOFC-Brennstoffzellensystemen auftreten, zu widerstehen.

Weiterhin wird für die erfindungsgemäße Polarplatte bevorzugt, dass das zumindest eine Flowfield zur Zuführung eines wasserstoffhaltigen Arbeitsgases zu einer Membran-Elektroden-Einheit vorgesehen ist. Ähnlich wie beim Stand der Technik, kann die Membran-Elektroden-Einheit beispielsweise größtenteils aus Yttrium stabilisiertem Zirkonoxid hergestellt sein.

Bei bestimmten Ausführungsformen der erfindungsgemäßen Polarplatte ist vorgesehen, dass sie eine Endplatte ist. Für eine der Endplatten eines Brennstoffzellenstapels ist es ausreichend, wenn sie ein Flowfield zur Verteilung des wasserstoffhaltigen Arbeitsgases enthält.

Bei anderen Ausführungsformen der erfindungsgemäßen Polarplatte ist vorgesehen, dass sie eine Bipolarplatte ist und dass auf der den Zugangsöffnungen gegenüberliegenden Seite der Bipolarplatte Verteileinrichtungen zur Zufuhr sauerstoffhaltigen Gases zu einer weiteren Membran-Elektroden-Einheit vorgesehen sind. Die Verteileinrichtung kann beispielsweise kanalartig ausgebildet und auf der dem Flowfield gegenüberliegenden Seite der Flowfield-Platte befestigt oder einstückig mit diesem ausgebildet sein.

Die erfindungsgemäße Abschlusseinheit für einen Brennstoffzellenstapel kann insbesondere umfassen:
- eine Polarplatte in Form einer Endplatte für einen Brennstoffzellenstapel, mit zumindest einem Flowfield, das von zumindest einer Seite der Endplatte über eine Mehrzahl von Zugangsöffnungen zugänglich ist, und
- eine Membran-Elektroden-Einheit, welche die Mehrzahl von Zugangsöffnungen überdeckt,
   wobei das zumindest eine Flowfield zur Zuführung eines wasserstoffhaltigen Arbeitsgases zu der Membran-Elektroden-Einheit vorgesehen ist.

Die erfindungsgemäße Wiederholeinheit für eine Brennstoffzellenstapel kann insbesondere umfassen:
- Eine Polarplatte in Form einer Bipolarplatte für einen Brennstoffzellenstapel, mit zumindest einem Flowfield, das von zumindest einer Seite der Endplatte über eine Mehrzahl von Zugangsöffnungen zugänglich ist, und
- eine Membran-Elektroden-Einheit, welche die Mehrzahl von Zugangsöffnungen überdeckt,
   wobei das zumindest eine Flowfield zur Zuführung eines wasserstoffhaltigen Arbeitsgases zu der Membran-Elektroden-Einheit vorgesehen ist, und wobei auf der den Zugangsöffnungen gegenüberliegenden Seite der Bipolarplatte Verteileinrichtungen zur Zufuhr sauerstoffhaltigen Gases zu einer weiteren, einer anderen Abschluss- oder Wiederholeinheit zugeordneten Membran-Elektroden-Einheit vorgesehen sind.

Des Weiteren umfasst der erfindungsgemäße Brennstoffzellenstapel:
- zumindest eine erfindungsgemäße Abschlusseinheit und
- eine Mehrzahl der erfindungsgemäßen Wiederholeinheiten.

Bevorzugte Ausführungsformen der Erfindung werden nachfolgend anhand der zugehörigen Zeichnung beispielhaft näher erläutert.

Es zeigen:
- Figur 1: eine eingangs bereits erläuterte Schnittansicht einer Abschlusseinheit gemäß dem Stand der Tech- nik;
- Figur 2: die eingangs ebenfalls bereits erläuterte Ab- schlusseinheit von Figur 1 in einem deformierten Zustand;
- Figur 3: eine schematische Schnittansicht einer Ausführ- ungsform der erfindungsgemäßen Abschlusseinheit;
- Figur 4: das eingangs bereits erläuterte Detail Y aus Fi- gur 1;
- Figur 5: das Detail Z aus Figur 5;
- Figur 6: eine eingangs bereits erläuterte perspektivische Darstellung einer Polarplatte gemäß dem Stand der Technik;
- Figur 7: eine perspektivische Darstellung einer Ausführ- ungsform der erfindungsgemäßen Polarplatte;
- Figur 8: eine schematische Schnittansicht einer Ausfüh- rungsform der erfindungsgemäßen Wiederholeinheit; und
- Figur 9: eine schematische Schnittansicht einer Ausführ- rungsform des erfindungsgemäßen Brennstoffzellen- stapels.

In den Figuren bezeichnen gleiche oder ähnliche Bezugszeichen gleiche oder ähnliche Elemente, die zur Vermeidung von Wiederholungen zumindest teilweise nur einmal erläutert werden.

Wie dies am Besten durch einen Vergleich der Figuren 6 und 7 zu erkennen ist, weist die erfindungsgemäße Polarplatte 10 anstelle einer einzigen großen Zugangsöffnung 18' (siehe Figur 6) eine Mehrzahl von Zugangsöffnungen 18 auf, wie dies in Figur 7 dargestellt ist. Die Mehrzahl der Zugangsöffnungen 18 ist dabei durch mehrer Verstärkungsstreben 20 voneinander getrennt, die durch Material einer Blindplatte 24 gebildet sind. Durch die Mehrzahl von Zugangsöffnungen 18 ist ein Flowfield 16 zugänglich, das von einer Flowfield-Platte 22 gebildet oder aufgenommen ist. Sowohl die Flowfield-Platte 22 als auch die Blindplatte 24 können in vorteilhafter Weise aus ferritischem Stahl bestehen.

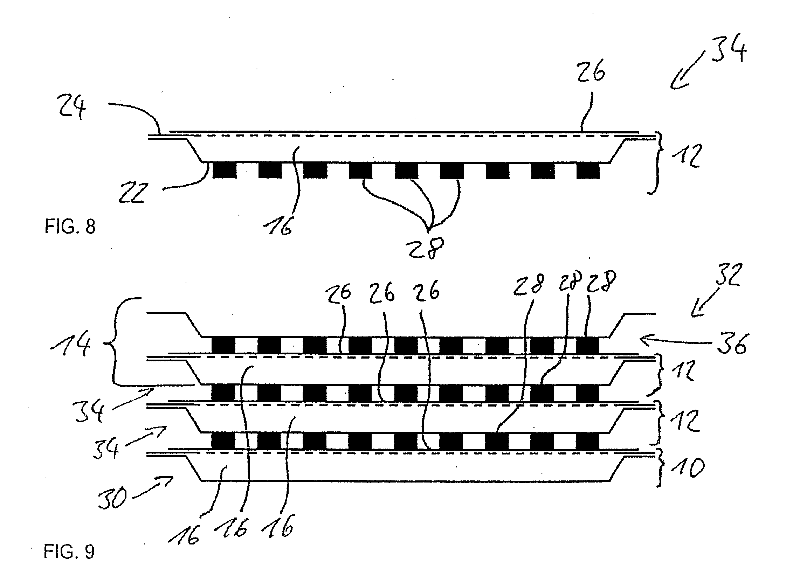

In den Figuren 3 und 5 ist der die Mehrzahl von Zugangsöffnungen 18 bildende Bereich der Blindplatte 24 gestrichelt dargestellt. Ein Vergleich der Figuren 4 und 5 zeigt, dass sich der Hebelarm L₂ im Vergleich zum Hebelarm L₁ von Figur 4 durch die Verstärkungsstreben 20 deutlich verkürzt. Dadurch wirkt ein geringeres Biegemoment auf eine aufgrund der Verstärkungsstreben 20 zu dem noch steifere Struktur. Sowohl die Deformation der erfindungsgemäßen Abschlusseinheit 30 (siehe Figur 3) als auch die Deformation der erfindungsgemäßen Wiederholeinheit 34 (siehe Figur 8) wird dadurch im Vergleich zum Stand der Technik zumindest deutlich vermindert. Die in Figur 8 dargestellte Wiederholeinheit 34 unterscheidet sich dadurch von der in Figur 3 dargestellten Abschlusseinheit 30, dass auf der dem Flowflied 16 gegenüberliegenden Seite der Flowfield-Platte 22, Verteileinrichtungen 28 zur Zuführung von sauerstoffhaltigem Gas zu einer weiteren Membran-Elektroden-Einheit vorgesehen sind. Diese Verteileinrichtungen 28 können in irgendeiner geeigneten, dem Fachmann gut bekannten Art ausgebildet sein, beispielsweise stegartig.

Das Zusammenwirken einer erfindungsgemäßen Abschlusseinheit 30 mit zwei erfindungsgemäßen Wiederholeinheiten 34 und einer weiteren hier nicht näher interessierenden Abschlusseinheit 36 von anderer Bauart ist in Figur 9 zu erkennen, die eine Ausführungsform des erfindungsgemäßen Brennstoffzellenstapels veranschaulicht. Dabei ist jeder Membran-Elektroden-Einheit über ein jeweiliges Flowfield 16 wasserstoffhaltiges Arbeitsgas auf der einen Seite und über jeweilige Verteileinrichtungen 28 sauerstoffhaltiges Gas auf der anderen Seite zuführbar, wie dies an sich bekannt ist. Obwohl die einzelnen Komponenten des Brennstoffzellenstapels 32 wie beim Stand der Technik unsymmetrisch aufgebaut sind, ergeben sich insgesamt geringere Biegemomente und eine steifere Struktur, die bei durch Temperaturschwankungen verursachten Spannungen im Vergleich zum Stand der Technik deutlich weniger deformiert wird.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 10, 10': Polarplatte
- 12: Polarplatte
- 14: Brennstoffzelle
- 16, 16': Flowfield
- 18, 18': Zugangsöffnung(en)
- 20: Verstärkungsstreben
- 22, 22': Flowfield-Platte
- 24, 24': Blindplatte
- 26, 26': Membran-Elektroden-Einheit
- 28: Verteileinrichtungen
- 30, 30': Abschlusseineinheit
- 32: Brennstoffzellenstapel
- 34: Wiederholeinheit
- 36: Abschlusseinheit anderer Bauart

## Patentansprüche

1. Polarplatte (10, 12), insbesondere Endplatte (10) oder Bipolarplatte (12), für eine Brennstoffzelle (14), mit zumindest einem Flowfield (16), das von zumindest einer Seite der Polarplatte (10, 12) zugänglich ist, die ferner eine das zumindest eine Flowfield (16) aufweisende Flowfield-Platte (22) und eine mehrere Zugangsöffnungen (18) aufweisende Blindplatte (24) umfasst, wobei das zumindest eine Flowfield (16) über die mehreren Zugangsöffnungen (18) zugänglich ist, **dadurch gekennzeichnet, dass** die mehreren Zugangsöffnungen (18) durch zumindest eine oder mehrere Verstärkungsstreben (20) voneinander getrennt sind.

2. Polarplatte (10, 12) nach Anspruch 1, **dadurch gekennzeichnet, dass** sie zumindest abschnittsweise aus Stahl, insbesondere aus ferritischem Stahl besteht.

3. Polarplatte (10, 12) nach einem der vorhergehenden Ansprüche, **dadurch gekennzeichnet, dass** das zumindest eine Flowfield (16) zur Zuführung eines wasserstoffhaltigen Arbeitsgases zu einer Membran-Elektroden-Einheit (26) vorgesehen ist.

4. Polarplatte (10, 12) nach Anspruch 3, **dadurch gekennzeichnet, dass** sie eine Endplatte (10) ist.

5. Polarplatte (10, 12) nach Anspruch 3, **dadurch gekennzeichnet, dass** sie eine Bipolarplatte (12) ist und dass auf der den Zugangsöffnungen (18) gegenüberliegenden Seite der Bipolarplatte (12) Verteileinrichtungen (28) zur Zufuhr sauerstoffhaltigen Gases zu einer weiteren Membran-Elektroden-Einheit (26) vorgesehen sind.

6. Abschlusseinheit (30) für einen Brennstoffzellenstapel (32), umfassend:
- eine Polarplatte (10) nach Anspruch 4 und
- eine Membran-Elektroden-Einheit (26), welche die mehreren Zugangsöffnungen (18) überdeckt.

7. Wiederholeinheit (34) für einen Brennstoffzellenstapel (32), umfassend:
- eine Polarplatte (12) nach Anspruch 5 und
- eine Membran-Elektroden-Einheit (26), welche die mehreren Zugangsöffnungen (18) überdeckt.

8. Brennstoffzellenstapel (32), umfassend:
- zumindest eine Abschlusseinheit (30) nach Anspruch 6 und
- eine Mehrzahl von Wiederholeinheiten (34) nach Anspruch 7.

## Claims

1. A polar plate (10, 12), particularly an end plate (10) or a bipolar plate (12), for a fuel cell (14), comprising at least one flow field (16) accessible from at least one side of the polar plate (10, 12), wherein the polar plate further comprises a flow field plate (22) comprising the at least one flow field (16) and a blind plate (24) comprising several access orifices (18), wherein the at least one flow field (16) is accessible via the several access orifices (18), **characterised in that** the several access orifices (18) are separated from each other by at least one or more enforcement struts (20).

2. The polar plate (10, 12) according to claim 1, **characterised in that** it consists, at least in portions, of steel, particularly of ferritic steel.

3. The polar plate (10, 12) according to one of the preceding claims, **characterised in that** the at least one flow field (16) is provided for supplying a hydrogenous working gas to a membrane-electrode unit (26).

4. The polar plate (10, 12) according to claim 3, **characterised in that** it is an end plate (10).

5. The polar plate (10, 12) according to claim 3, **characterised in that** it is a bipolar plate (12) and **in that** distributor means (28) for supplying oxygenic gas to another membrane-electrode unit (26) are provided on the side of the bipolar plane (12) opposing the access orifices (18).

6. A termination unit (30) for a fuel cell stack (32), comprising:
- a polar plate (10) according to claim 4, and
- a membrane-electrode unit (26) covering the several access orifices (18).

7. A repetitive unit (34) for a fuel cell stack (32), comprising:
- a polar plate (12) according to claim 5, and
- a membrane-electrode unit (26) covering the several access orifices (18).

8. A fuel cell stack (32), comprising:
- at least one termination unit (30) according to claim 6, and
- a plurality of repetitive units (34) according to claim 7.

## Revendications

1. Plaque polaire (10, 12), en particulier une plaque terminale (10) ou une plaque bipolaire (12), pour une pile à combustible (14), comprenant au moins un champ d'écoulement (16) qui est accessible d'au moins un côté de la plaque polaire (10,12), la plaque polaire comprenant en plus une plaque de champ d'écoulement (22) qui comporte l'au moins un champ d'écoulement (16) et une plaque aveugle (24) qui comporte plusieurs orifices d'accès (18), l'au moins un champ d'écoulement (16) étant accessible à travers les plusieurs orifices d'accès (18), **caractérisée en ce que** les plusieurs orifices d'accès (18) sont séparés l'un de l'autre par au moins une ou plusieures potences de renforcement (20).

2. Plaque polaire (10, 12) selon la revendication 1, **caractérisée en ce qu'**elle consiste, au moins par sections, d'acier, notamment d'acier ferritique.

3. Plaque polaire (10, 12) selon l'une des revendications précédentes, **caractérisée en ce que** l'au moins un champ d'écoulement (16) est prévu pour amener un gaz de travail contenant de l'hydrogène à un ensemble membrane-électrodes (26).

4. Plaque polaire (10, 12) selon la revendication 3, **caractérisée en ce qu'**elle est une plaque terminale (10).

5. Plaque polaire (10, 12) selon la revendication 3, **caractérisée en ce qu'**elle est une plaque bipolaire (12) et **en ce que** des moyens de distribution (28) sont prévus sur le côté de la plaque bipolaire (12) qui est opposé aux orifices d'accès (18), pour amener du gaz contenant de l'oxygène à un autre ensemble membrane-électrodes (26).

6. Unité terminale (30) pour un bloc de pile à combustible (32), comprenant:
- une plaque polaire (10) selon la revendication 4 et
- un ensemble membrane-électrodes (26) qui couvre les plusieurs orifices d'accès (18).

7. Unité de répétition (34) pour un bloc de pile à combustible (32), comprenant:
- une plaque polaire (12) selon la revendication 5 et
- un ensemble membrane-électrodes (26) qui couvre les plusieurs orifices d'accès (18).

8. Bloc de pile à combustible (32), comprenant:
- au moins une unité terminale (30) selon la revendication 6 et
- une pluralité d'unités de répétition (34) selon la revendication 7.
